# EUROPÄISCHE PATENTSCHRIFT

(11) **EP 0 917 334 B1**
(45) Veröffentlichungstag und Bekanntmachung des Hinweises auf die Patenterteilung: **06.12.2006**
(21) Anmeldenummer: 98119712.2
(22) Anmeldetag: 16.10.1998
(51) Int. Cl.: H04M 3/42, H04M 11/00

(54) **Verfahren für ein Kommunikationssystem zum Verbindungsaufbau zwischen zwei Endgeräten**
Method for a communication system for call setup between two terminals
Méthode pour un système de communication pour l'établissement d'un appel entre deux terminaux

(30) Priorität: 11.11.1997 DE 19749928
(43) Veröffentlichungstag der Anmeldung: 19.05.1999
(73) Patentinhaber: SIEMENS AKTIENGESELLSCHAFT, 80333 München (DE)
(72) Erfinder: Ow, Hans-Peter, von, D 81379 München (DE)

(56) Entgegenhaltungen:
- EP-A- 0 717 545
- WO-A-97/24864
- US-A- 5 629 687

## Beschreibung

Bei zeitgemäßen Kommunikationssystemen können verschiedene Leistungsmerkmale, z.B. die Weitergabe eintreffender Gespräche oder das Einrichten von Konferenzschaltungen, durch Eingabe dazu vorgesehener Funktionscodes bzw. durch Betätigen von Funktionstasten an Endgeräten aktiviert werden.

Zur optischen und/oder akustischen Überwachung, z.B. von Räumen, werden bisher spezielle, oft aufwendig konzipierte Überwachungssysteme eingesetzt.

Aus der Druckschrift WO 97/24864 ist ein Verfahren zum Verbindungsaufbau zwischen mehreren Teilnehmern im Rahmen einer sog. Meet-me-Konferenz bekannt. Bei einer solchen Meet-me-Konferenz sind die Konferenzteilnehmer nicht von einem Konferenzleiter anzurufen, sondern können sich selbst in die Konferenz einwählen. Eine Meet-me-Konferenz ist jedoch kein praktikables Verfahren, um entfernte Räume flexibel und benutzergesteuert zu überwachen.

Aufgabe der vorliegenden Erfindung ist es, ein Verfahren für Kommunikationssysteme anzugeben, mit dem ein Leistungsmerkmal realisierbar ist, das eine flexible akustische bzw. optische Überwachung eines Raumes mittels eines darin befindlichen Endgerätes über ein zweites Endgerät erlaubt.

Gelöst wird diese Aufgabe erfindungsgemäß durch die Merkmale des Patentanspruchs 1.

Da zu überwachende Räume häufig auch mit Kommunikationsendgeräten ausgestattet sind oder mit geringem Aufwand damit aus gestattet werden können, wird angestrebt, Räume mittels darin befindlicher Kommunikationsendgeräte überwachbar zu machen.

Das standardmäßige Verfahren zum Verbindungsaufbau in Kommunikationssystemen ist für eine Anwendung zur Raumüberwachung allerdings wenig zweckmäßig. Üblicherweise wird eine Verbindung zwischen zwei Endgeräten in einem Kommunikationssystem aufgebaut, indem ein erstes Endgerät von einem zweiten Endgerät aus angewählt wird, woraufhin ein durch ein Signal aufmerksam gemachter Teilnehmer am ersten Endgerät sein Einverständnis zu einem Verbindungsaufbau, z.B. durch Abheben eines Hörers, erteilt. Sollen auf diese Weise Räume überwacht werden, in denen keine Person anwesend ist, die einem Verbindungsaufbau zustimmt, müssen die Verbindungen zwischen den in den zu überwachenden Räumen befindlichen Endgeräten und den Endgeräten der überwachenden Personen bereits vor Beginn einer Überwachung aufgebaut und ständig aufrechterhalten werden. Dies erfordert für jeden für eine Überwachung in Frage kommenden Raum eine reservierte Verbindung bzw. zwei reservierte Endgeräte, die während der Überwachung für andere Zwecke nicht zur Verfügung stehen.

Das erfindungsgemäße Verfahren wird im wesentlichen von einer Funktionssteuerung ausgeführt, die als Teil einer zentralen Steuerung des Kommunikationssystems angesehen werden kann.

Die Eingabe des ersten Funktionscodes zur Initialisierung des zweiseitig initiierten Verbindungsaufbaus an einem ersten Endgerät, das sich in einem zu überwachenden Raum befindet, kann als Verbindungsangebot ohne Festlegung eines Verbindungspartners aufgefaßt werden. Durch nachfolgende Anwahl des ersten Endgerätes in Verbindung mit einer Eingabe des zweiten Funktionscodes für eine Verbindungsübernahme an einem beliebigen zweiten Endgerät wird das Verbindungsangebot des ersten Endgerätes vom zweiten Endgerät aus angenommen, worauf die Verbindung durchgeschaltet wird, mit deren Hilfe eine Raumüberwachung durchgeführt werden kann. Beide Funktionscodes können jeweils u.a. aus einer alphanumerischen Zeichenfolge oder aus einem durch Betätigen einer Funktionstaste ausgelösten Signal bestehen.

Ein wesentlicher Vorteil des erfindungsgemäßen Verfahrens besteht darin, daß eine Verbindung zu einem ersten Endgerät aufgebaut werden kann, ohne daß ein Teilnehmer am ersten Endgerät anwesend sein muß. Insbesondere kann dieselbe Person am ersten Endgerät ein Verbindungsangebot hinterlegen und von einem zweiten Endgerät aus eine Verbindung zum ersten veranlassen. So können Verbindungen je nach Erfordernissen allein vom zweiten Endgerät aus aufgebaut und wieder abgebaut werden. Bei einer Raumüberwachung können auf diese Weise mehrere Räume mittels eines einzigen Endgerätes stichprobenartig überwacht werden, indem nacheinander Verbindungen zu den in den zu überwachenden Räumen befindlichen Endgeräten aufgebaut werden, wobei natürlich an letztgenannten Endgeräten ein Verbindungsangebot vorliegen muß.

Ein weiterer Vorteil des erfindungsgemäßen Verfahrens besteht darin, daß ein Verbindungsangebot im Prinzip von beliebigen zweiten Endgeräten aus angenommen werden kann. Dazu gehören insbesondere auch über externe Leitungen (z.B. Amtsleitungen) mit dem Kommunikationssystem verbindbare zweite Endgeräte. Bei einer Raumüberwachung ist ein Überwachender somit nicht an ein bestimmtes Endgerät gebunden. Beispielsweise kann so ein in einem Hotelzimmer liegendes Kleinkind von jedem Endgerät des Hotels oder auch von externen Endgeräten aus (auch wechselweise) überwacht werden.

Ferner ist es vorteilhaft, daß der zweiseitig initiierte Aufbau von Verbindungen rein teilnehmerkontrolliert abläuft; d.h. es ist dazu kein zusätzlicher Administrations- oder Konfigurationsaufwand am Kommunikationssystem erforderlich.

Vorteilhafte Weiterbildungen der Erfindung sind in den Unteransprüchen angegeben.

Durch die Abfrage einer Paßwortinformation am ersten Endgerät, die z.B. aus einer vom Benutzer des ersten Endgerätes frei wählbaren einzugebenden Ziffernfolge oder sonstigen Tastenkombination bestehen kann, kann das Verbindungsangebot auf diejenigen Benutzer anderer Endgeräte eingeschränkt werden, die sich im Besitz dieser Paßwortinformation befinden. Auf diese Weise kann der Benutzer des ersten Endgerätes gegen einen Verbindungsaufbau zu diesem Endgerät durch Unberechtigte geschützt werden.

Als zusätzliche Sicherheitsmaßnahme gegen einen unberechtigten Verbindungsaufbau kann vorgesehen sein, daß nach mehrmaliger Eingabe einer mit der am ersten Endgerät eingegebenen Paßwortinformation nicht übereinstimmenden Paßwortinformation am zweiten Endgerät, das zweite Endgerät für eine Verbindungsübernahme zeitweise gesperrt wird oder das Verbindungsangebot des ersten Endgeräts zurückgezogen wird.

Falls die Eingabe des zweiten Funktionscodes zur Verbindungsübernahme am zweiten Endgerät nach der Anwahl des ersten Endgeräts erfolgt, kann dieser Funktionscode mit dem am ersten Endgerät eingegebenen, ersten Funktionscode übereinstimmen. Die Verwendung eines einheitlichen Funktionscodes vereinfacht die Handhabung des Leistungsmerkmals durch den Benutzer.

Zur akustischen oder optischen Überwachung von Räumen ist im allgemeinen nur eine gerichtete Übermittlung von Sprach- und/oder Videoinformation von dem, im zu überwachenden Raum befindlichen, ersten Endgerät zum zweiten Endgerät notwendig. Eine bei bidirektionalen Verbindungen übliche gleichzeitige Sprach- und/oder Videoübertragung in entgegengesetzter Richtung kann für Überwachungszwecke mitunter störend sein.

Die Anzeige eines optischen oder akustischen Signals am ersten Endgerät dient der Unterrichtung einer am ersten Endgerät eventuell anwesenden Person über das Bestehen einer Verbindung. Dies kann als zusätzliche Sicherheitsmaßnahme verstanden werden, um beispielsweise bei einem irrtümlichen Verbindungsangebot oder einer versäumten Zurücknahme eines Verbindungsangebotes eine nicht erkennbare Überwachung auszuschließen.

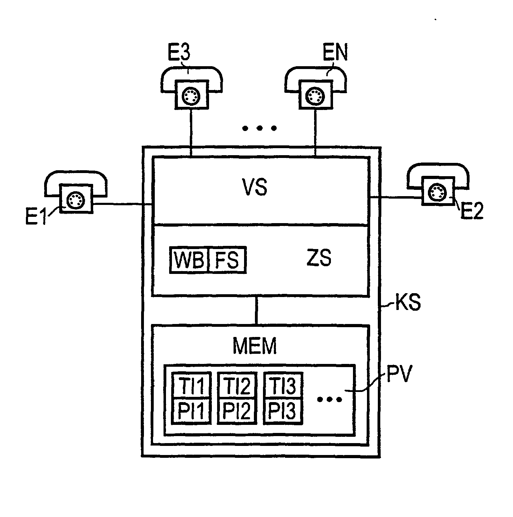

Die Erfindung wird nachfolgend anhand eines bevorzugten Ausführungsbeispiels unter Bezugnahme auf die Figur näher erläutert.

Die Figur zeigt ein Kommunikationssystem in schematischer Darstellung.

In der Figur ist ein Kommunikationssystem KS schematisch dargestellt, das sich aus einer Verbindungssteuerung VS, einer zentralen Steuerung ZS und einem zentralen Speicher MEM zusammensetzt. An das Kommunikationssystem KS sind Endgeräte E1,E2,...,EN angeschlossen.

Die zentrale Steuerung ZS weist eine Wahlbewertungseinrichtung WB und eine Funktionssteuerung FS auf, die durch Funktionscodeeingabe aktivierbar ist.

Im zentralen Speicher MEM ist ein Paßwortverzeichnis PV angelegt. Es enthält Speicherplätze TI1, TI2,... zur Speicherung von Endgeräte identifizierenden Teilnehmeranschlußinformationen sowie diesen jeweils zugeordnete Speicherplätze PI1, PI2,... zur Speicherung von an diesen Endgeräten jeweils eingegebenen Paßwortinformationen.

Wird von einem beliebigen Endgerät E1 aus ein erster Funktionscode zum zweiseitig initiierten Verbindungsaufbau, der z.B. aus einer dafür vorgesehenen Ziffernfolge bestehen kann, eingegeben, erkennt dies die Wahlbewertungseinrichtung WB der zentralen Steuerung ZS und aktiviert daraufhin die Funktionssteuerung FS. Diese veranlaßt eine Abfrage einer Paßwortinformation am ersten Endgerät E1, die beispielsweise aus einer vom Benutzer des ersten Endgerätes frei wählbaren Ziffernfolge bestehen kann. Die eingegebene Paßwortinformation und eine das erste Endgerät E1 identifizierende Teilnehmeranschlußinformation werden im Paßwortverzeichnis PV in einem freien Paar von Speicherplätzen TI1, PI1 einander zugeordnet abgespeichert. Solange die Verbindung vom ersten Endgerät E1 zur Vermittlungssteuerung VS nicht explizit vom ersten Endgerät E1 aus, z.B. durch Auflegen des Hörers, unterbrochen wird, ist das erste Endgerät E1 damit für eine Verbindungsübernahme von beliebigen zweiten Endgeräten E2 aus freigegeben. Bei expliziter Unterbrechung dieser Verbindung werden die Paßwortinformation und die Teilnehmeranschlußinformation aus ihren Speicherplätzen PI1 bzw. TI1 wieder gelöscht und ein Verbindungsangebot damit zurückgezogen.

Zur Verbindungsübernahme von einem beliebigen zweiten Endgerät E2 aus wird das erste Endgerät E1 zunächst durch seine Rufnummer angewählt. Da im Rahmen des zweiseitig initiierten Verbindungsaufbaus bereits eine Verbindung vom ersten Endgerät E1 zur Vermittlungssteuerung VS besteht, wird dem zweiten Endgerät E2 anfangs eine auf diesen Zustand hinweisende Statusinformation, z.B. eine Belegtsignalisierung, übermittelt. Wird daraufhin ein zweiter Funktionscode zur Verbindungsübernahme, der aus einer für diesen Zweck im Kommunikationssystem KS reservierten Ziffernfolge bestehen kann, am zweiten Endgerät E2 eingegeben, erkennt dies wiederum die Wahlbewertungseinrichtung WB und aktiviert die Funktionssteuerung FS. Diese prüft zunächst anhand der im Speicher hinterlegten Teilnehmeranschlußinformationen, ob das angewählte Endgerät für eine Verbindungsübernahme freigegeben ist. Ist dies nicht der Fall, wird dem zweiten Endgerät E2 ein negatives Quittungssignal übermittelt. Im anderen Fall wird die Abfrage einer Paßwortinformation am zweiten Endgerät E2 veranlaßt. Die Paßwortinformation wird von der Funktionssteuerung FS entgegengenommen und mit der Paßwortinformation, die zusammen mit der das angewählte Endgerät identifizierenden Teilnehmeranschlußinformation abgespeichert wurde, verglichen. Bei Nichtübereinstimmung wird ein negatives Quittungssignal zum zweiten Endgerät E2 übermittelt und eine Verbindungsübernahme verweigert. Um einen Mißbrauch zu verhindern kann vorgesehen sein, daß nach mehrmaligen Eingabeversuchen von Paßwortinformation, die nicht mit der abgespeicherten Paßwortinformation übereinstimmt, das zweite Endgerät E2 für eine Verbindungsübernahme gesperrt wird oder das Verbindungsangebot des ersten Endgerätes E1 z.B. durch Unterbrechung seiner Verbindung zur Vermittlungssteuerung VS oder Löschung der Paßwort- und der Teilnehmeranschlußinformation, zurückgezogen wird.

Bei Übereinstimmung der verglichenen Paßwortinformationen wird die Vermittlungssteuerung VS von der Funktionssteuerung FS zum Durchschalten einer Verbindung zwischen erstem und zweitem Endgerät veranlaßt.

## Patentansprüche

1. Verfahren für ein Kommunikationssystem (KS) zum zweiseitig initiierten Verbindungsaufbau zwischen Endgeräten (E1, E2) mit folgenden Schritten:
a) nach Erkennen eines an einem ersten Endgerät (E1) eingegebenen ersten Funktionscodes zur Initialisierung eines zweiseitig initiierten Verbindungsaufbaus wird eine das erste Endgerät (E1) identifizierende Teilnehmeranschlußinformation abgespeichert,
b) nach erfolgter Eingabe einer das erste Endgerät (E1)identifizierenden, zu dessen Anwahl vorgesehenen Rufnummer sowie eines zweiten Funktionscodes zur Verbindungsübernahme im Rahmen des zweiseitig initiierten Verbindungsaufbaus an einem zweiten Endgerät (E2) wird überprüft, ob die Teilnehmeranschlußinformation des durch die eingegebene Rufnummer identifizierten ersten Endgerätes (E1) im Rahmen einer Initialisierung des zweiseitig initiierten Verbindungsaufbaus gespeichert ist und
c) bei positivem Prüfungsergebnis wird eine Verbindung zwischen dem zweiten (E2) und dem ersten Endgerät (E1) durchgeschaltet.

2. Verfahren nach Anspruch 1,
**dadurch gekennzeichnet,**
**daß** nach Erkennen des am ersten Endgerät (E1) eingegebenen ersten Funktionscodes eine Aufforderung zur Eingabe einer Paßwortinformation am ersten Endgerät (E1) erfolgt,
**daß** die am ersten Endgerät (E1) eingegebene Paßwortinformation und die das erste Endgerät (E1) identifizierende Teilnehmeranschlußinformation einander zugeordnet abgespeichert werden,
**daß** nach Eingabe des zweiten Funktionscodes eine Aufforderung zur Eingabe einer Paßwortinformation am zweiten Endgerät (E2) erfolgt,
**daß** nach Eingabe einer Paßwortinformation am zweiten Endgerät (E2) diese mit der zugeordnet zu der das erste Endgerät (E1) identifizierenden Teilnehmeranschlußinformation gespeicherten Paßwortinformation verglichen wird, und daß nur bei Übereinstimmung die Verbindung zwischen erstem (E1) und zweitem (E2) Endgerät durchgeschaltet wird.

3. Verfahren nach Anspruch 2,
**dadurch gekennzeichnet,**
**daß** nach mehrmaliger Eingabe einer mit der am ersten Endgerät (E1) eingegebenen Paßwortinformation nicht übereinstimmenden Paßwortinformation am zweiten Endgerät (E2) das zweite Endgerät (E2) für eine Verbindungsübernahme im Rahmen des zweiseitig initiierten Verbindungsaufbaus zeitweise gesperrt wird.

4. Verfahren nach einem der vorhergehenden Ansprüche,
**dadurch gekennzeichnet,**
**daß** nach erfolgter Eingabe der das erste Endgerät (E1) identifizierenden Rufnummer am zweiten Endgerät (E2) eine Statusinformation zum zweiten Endgerät (E2) übermittelt wird.

5. Verfahren nach einem der vorhergehenden Ansprüche,
**dadurch gekennzeichnet,**
**daß** der erste Funktionscode mit dem zweiten Funktionscode identisch ist.

6. Verfahren nach einem der vorhergehenden Ansprüche,
**dadurch gekennzeichnet,**
**daß** für Überwachungszwecke eine gerichtete Verbindung zwischen dem ersten (E1) und dem zweiten Endgerät (E2) aufgebaut wird, bei der Sprach- und/oder Videoinformation nur in der Richtung vom ersten (E1) zum zweiten Endgerät (E2) übermittelt wird.

7. Verfahren nach einem der vorhergehenden Ansprüche,
**dadurch gekennzeichnet,**
**daß** nach Durchschalten der Verbindung das erste Endgerät (E1) zur Anzeige eines optischen und/oder akustischen Signals veranlaßt wird.

## Claims

1. Method for a communications system (KS) for a bilaterally initiated call setup between terminals (E1, E2), having the following steps:
(a) after recognition of a first function code entered at a first terminal (E1) for the initialisation of a bilaterally initiated call setup, subscriber connection information identifying the first terminal (E1) is saved,
(b) after entry of a call number which identifies the first terminal (E1) and which is provided for the selection thereof, and after entry of a second function code for call accept as part of the bilaterally initiated call setup at a second terminal (E2), verification determines whether the subscriber connection information of the first terminal (E1) identified by the call number entered is stored as part of an initialisation of the bilaterally initiated call setup, and
(c) if the check result is positive, a call is connected between the second terminal (E2) and the first terminal (E1) .

2. Method according to claim 1,
**characterised**
**in that**, after recognition of the first function code entered at the first terminal (E1), a request is issued for the entry of password information at the first terminal (E1),
**in that** the password information entered at the first terminal (E1) and the subscriber connection information identifying the first terminal (E1) are saved in a mutually associated manner,
**in that**, after entry of the second function code, a request is issued for the entry of password information at the second terminal (E2),
**in that**, after entry of password information at the second terminal (E2), the said information is compared with the stored password information associated with the subscriber connection information identifying the first terminal (E1), and
**in that** only if they match is the call connected between the first terminal (E1) and the second terminal (E2).

3. Method according to claim 2,
**characterised in that**,
after the repeated entry, at the second terminal (E2), of password information which does not match the password information entered at the first terminal (E1), the second terminal (E2) is temporarily blocked for call accept as part of the bilaterally initiated call setup.

4. Method according to one of the preceding claims,
**characterised in that**,
after entry, at the second terminal (E2), of the call number identifying the first terminal (E1), status information is communicated to the second terminal (E2).

5. Method according to one of the preceding claims,
**characterised in that**
the first function code is identical to the second function code.

6. Method according to one of the preceding claims,
**characterised in that**,
for monitoring purposes, there is set up between the first terminal (E1) and the second terminal (E2) a one-way call in which voice information and/or video information is communicated only in the direction from the first terminal (E1) to the second terminal (E2).

7. Method according to one of the preceding claims,
**characterised in that**,
after connection of the call, the first terminal (E1) is prompted to display a visual and/or an acoustic signal.

## Revendications

1. Procédé pour un système de communication (KS) pour l'établissement d'un appel initié des deux côtés entre des terminaux (E1, E2), comprenant les étapes suivantes :
a) après l'identification d'un premier code de fonction, entré sur un premier terminal (E1), pour l'initialisation d'un établissement d'appel initié des deux côtés, une information de branchement d'abonné identifiant le premier terminal (E1) est mémorisée,
b) après l'entrée réussie d'un numéro d'appel identifiant le premier terminal (E1) et prévu pour sélectionner celui-ci ainsi que d'un deuxième code de fonction pour l'acceptation de l'appel dans le cadre de l'établissement de l'appel initié des deux côtés, il est vérifié si l'information de branchement d'abonné du premier terminal (E1) identifié par le numéro d'appel entré est mémorisée dans le cadre d'une initialisation de l'établissement de l'appel initié des deux côtés et
c) en cas de résultat positif de la vérification, une communication est connectée entre le deuxième terminal (E2) et le premier terminal (E1).

2. Procédé selon la revendication 1,
**caractérisé en ce**
**qu'**après l'identification du premier code de fonction entré sur le premier terminal (E1), une invitation à entrer une information de mot de passe sur le premier terminal (E1) a lieu,
en ce que l'information de mot de passe entrée sur le premier terminal (E1) et l'information de branchement d'abonné identifiant le premier terminal (E1) sont mémorisées en étant attribuées l'une à l'autre,
en ce qu'après l'entrée du deuxième code de fonction, une invitation à entrer une information de mot de passe sur le deuxième terminal (E2) a lieu,
en ce qu'après l'entrée d'une information de mot de passe sur le deuxième terminal (E2), celle-ci est comparée à l'information de mot de passe mémorisée et attribuée à l'information de branchement d'abonné identifiant le premier terminal (E1), et
en ce que l'appel est connecté entre le premier terminal (E1) et le deuxième terminal (E2) seulement en cas de concordance.

3. Procédé selon la revendication 2,
**caractérisé en ce**
**qu'**après une entrée répétée sur le deuxième terminal (E2) d'une information de mot de passe non concordante avec l'information de mot de passe entrée sur le premier terminal (E1), le deuxième terminal (E2) est temporairement bloqué pour une acceptation d'appel dans le cadre de l'établissement de l'appel initié des deux côtés.

4. Procédé selon l'une quelconque des revendications précédentes,
**caractérisé en ce**
**qu'**après l'entrée réussie du numéro d'appel identifiant le premier terminal (E1), une information d'état est transmise au deuxième terminal (E2).

5. Procédé selon l'une quelconque des revendications précédentes,
**caractérisé en ce**
**que** le premier code de fonction est identique au deuxième code de fonction.

6. Procédé selon l'une quelconque des revendications précédentes,
**caractérisé en ce**
**que**, à des fins de surveillance, un appel directif est établi entre le premier terminal (E1) et le deuxième terminal (E2), au cours duquel des informations vocales et/ou des informations vidéo sont transmises seulement dans le sens du premier terminal (E1) au deuxième terminal (E2).

7. Procédé selon l'une quelconque des revendications précédentes,
**caractérisé en ce**
**qu'**après la connexion de l'appel, le premier terminal (E1) est incité à visualiser un signal optique et/ou acoustique.
